# EUROPÄISCHE PATENTSCHRIFT

(11) **EP 1 678 029 B1**
(45) Veröffentlichungstag und Bekanntmachung des Hinweises auf die Patenterteilung: **03.10.2007**
(21) Anmeldenummer: 04786813.8
(22) Anmeldetag: 18.09.2004
(51) Int. Cl.: B62D 25/20, B62D 25/08, F16F 15/00

(54) **KRAFTFAHRZEUGKAROSSERIE ODER KFZ-TRAGRAHMEN MIT SCHWINGUNGSDÄMPFUNGSEINRICHTUNG**
MOTOR VEHICLE BODY OR SUPPORTING FRAME COMPRISING A VIBRATION DAMPING DEVICE
CARROSSERIE OU CHASSIS PORTEUR DE VEHICULE AUTOMOBILE COMPORTANT UN DISPOSITIF AMORTISSANT LES VIBRATIONS

(30) Priorität: 11.10.2003 DE 10347366
(43) Veröffentlichungstag der Anmeldung: 12.07.2006
(73) Patentinhaber: Wilhelm Karmann GmbH, 49084 Osnabrück (DE)
(72) Erfinder: BUNSMANN, Winfried, 49143 Bissendorf (DE); KALINKE, Peter, 49076 Osnabrück (DE)
(86) Internationale Anmeldenummer: PCT/DE2004/002095
(87) Internationale Veröffentlichungsnummer: WO 2005/035335

(56) Entgegenhaltungen:
- EP-A- 1 225 119
- DE-A- 19 820 617

## Beschreibung

Die Erfindung betrifft ein Kraftfahrzeug, insbesondere ein Cabriolet-Fahrzeug, nach dem Oberbegriff des Anspruchs 1 sowie ein Kraftfahrzeug mit einem Rahmen nach dem Oberbegriff des Anspruchs 6. Ein solches Kraftfahrzeug wird in der DE 198 20617 A beschrieben.

Bei Kraftfahrzeugen stellt sich allgemein das Problem, daß im Fahrbetrieb auftretende äußere Anregungen von Schwingungen, etwa beim Überfahren von Fahrbahnunebenheiten, zum Beispiel Schlaglöchern oder aufwärts ragenden Schwellen, unerwünschte Schwingungen der Karosserie auslösen können. Solche Schwingungen in der Karosserie mindern Fahrsicherheit und -komfort. Dieses Problem tritt in besonderem Maß bei Cabriolet-Fahrzeugen mit einer selbsttragenden Karosserie auf, die aufgrund des nicht starren Daches, das vor allem im geöffneten Zustand die Karosserie nicht aussteifen kann, einen Stabilitätsnachteil gegenüber geschlossenen Fahrzeugaufbauten aufweisen. Grundsätzlich stellt es sich jedoch bei allen Fahrzeugen, auch bei solchen, die keine selbsttragende Karosserie haben, etwa auch bei Rahmenfahrzeugen, zum Beispiel Motorrädern oder Fahrzeugen mit Aluminiumkarosserien, die ganz oder teilweise von einem Profilrahmen unterstützt sind.

Es ist bekannt, gegen den Aufbau von Schwingungen sog. Schwingungstilger vorzusehen, d.h.

Dämpfungsmassen, die jeweils geeignet sind, Schwingungen bestimmter Frequenzen, auf die die Tilger abgestimmt sind, zu dämpfen. Die Abstimmung ist jeweils nur auf eine bestimmte einzelne Frequenz möglich; zudem ist eine Anpassung an den jeweiligen Fahrzeugtyp erforderlich, wobei die Anordnung der Tilger in Karosseriehohlräumen konstruktiv schwierig ist. Die Tilger selbst müssen eine große Masse haben, was einem gewünschten geringen Fahrzeuggewicht und einem sparsamen Betrieb entgegenwirkt.

Die DE 198 20 617 C2 zeigt die Möglichkeit, einzelne, in sich längenvariable Streben einer selbsttragenden Karosserie oder eines Fahrzeugrahmens mit einer Aufnahmeeinheit für eine äußere Längsbeanspruchung der jeweiligen Strebe, einem Stellglied zum Bewirken einer aktiven Gegenkraft und einer Steuereinheit für das Stellglied auszurüsten. Dadurch kann selektiv der äußeren Schwingungsanregung mit kurzen Ansprechzeiten entgegengewirkt werden. Allerdings erfordert dieses einen hohen konstruktiven Aufwand, da die Streben jeweils längenvariabel sein und mit den genannten Funktionseinheiten ausgerüstet werden müssen.

Der Erfindung liegt das Problem zugrunde, bei einem Kraftfahrzeug der genannten Art das Entgegenwirken gegen äußere Schwingungsanregungen konstruktiv zu vereinfachen.

Die Erfindung löst dieses Problem durch ein Kraftfahrzeug mit den Merkmalen des Anspruchs 1 und durch ein Kraftfahrzeug mit den Merkmalen des Anspruchs 6, die einzeln oder in Kombination miteinander verwirklicht sein können. Vorteilhafte Ausgestaltungen des Gegenstandes der Erfindung ergeben sich aus den weiteren Ansprüchen 2 bis 5 und 7 bis 10.

Durch die erfindungsgemäße Ausbildung kann für eine Fahrzeugkarosserie und/oder einen Tragrahmen eine Schwingungsverminderung durch gleichzeitige Einwirkung auf mehrere Streben, also langerstreckte Strukturen der Karosserie oder des Rahmens, erreicht werden, wobei wegen der gemeinsamen Halteeinrichtung nicht auf jede Strebe einzeln eingewirkt werden muß. Der konstruktive Aufwand ist dadurch minimiert.

Wenn die Halteeinrichtung an der Karosserie schwenkbar gehalten ist und zumindest einen Lenker umfaßt, der in seinem mittleren Bereich um eine Achse schwenkbar und an seinen Endbereichen mit symmetrisch liegenden Streben verbunden ist, können durch eine Schwenkbewegung der Halteeinrichtung exakt gegenphasige Kräfte in die Streben eingeleitet werden, wodurch etwa eine der Streben gestaucht und die andere gestreckt werden kann. Diejenige Strebe, die durch äußere Kraft, etwa bei einseitigen Überfahren eines Schlaglochs, gestaucht wird, erfährt dabei die streckende und somit der äußeren Anregung entgegenwirkende Kraft.

Sofern die Streben als von der Karosserie gesonderte Aussteifungsbauteile ausgebildet sind, kann eine Montage sowohl der Streben mit der gemeinsamen Halteeinrichtung einfach nach Art eines vorgefertigten Moduls unter dem Fahrzeugboden erfolgen. Zudem kann die Strebe damit auch außerhalb der jeweiligen aktiven Schwingungstilgung die Funktion eines aussteifenden Bauteils bei einem Fahrzeug mit zum Beispiel selbsttragender Karosserie erfüllen.

Die Streben können auch Bestandteil eines tragenden Rahmens sein. In jedem Fall ist der Zusatzaufwand für die Umrüstung ohnehin erforderlicher Streben für deren erfindungsgemäße Umrüstung minimiert.

Als Steuereinheit für das oder die Stellglied(er) kann ein Rechner Verwendung finden, der mittels eines Lernprogramms eine möglichst optimale Reaktion auf die zwischen den Haltepunkten der Strebe festgestellte Beanspruchung liefern kann.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Ansicht eines Unterbodens eines Kraftfahrzeugs von unten mit im wesentlichen diagonal erstreckten Aussteifungsstreben,
- Fig. 2: eine Detailansicht eines Heckbereichs einer Bodengruppe mit erfindungsgemäßer Strebenausbildung,
- Fig. 3: eine Detailansicht eines Stellglieds zur Schwenkbeeinflussung der Halteeinrichtung.

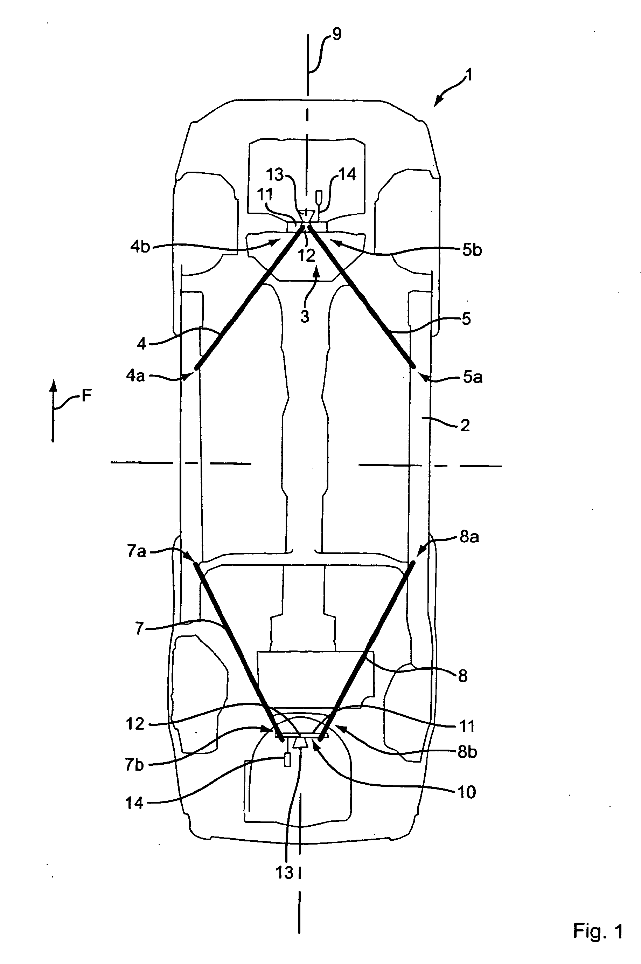

Gemäß dem gezeichneten Ausführungsbeispiel nach Figur 1 ist der Bodengruppe 2 eines Fahrzeugs 1 ein vorderes Paar 3 von Aussteifungsstreben 4, 5 und ein hinteres Paar 6 von Aussteifungsstreben 7, 8 zugeordnet. Diese Anzahl und Anordnung von Streben ist nicht zwingend und nur beispielhaft.

Die Paare 3, 6 sind hier ungefähr jeweils symmetrisch bezüglich einer vertikalen Längsmittelebene 9. Ihre Streben 4, 5 bzw. 7, 8 erstrecken sich von äußeren Randbereichen des Bodens 2 in bis nahe an die vertikale Längsmittelebene 9. Sie sind hier jeweils als von dem Boden 2 gesonderte Profile, etwa Rohr- oder Kastenprofile, aus Metall oder etwa auch einem faserverstärkten Kunststoff ausgebildet. Die Form der Streben 4, 5, 7, 8 kann von der hier gezeigten Geradlinigkeit erheblich abweichen. Auch etwa abgewinkelte und/oder bereichsweise flächige Bauteile kommen in Betracht.

Bei ohnehin vorhandenen Aussteifungsstreben der Karosserie erfüllen diese bei erfindungsgemäßer Ausbildung eine Doppelfunktion: Sie dienen einerseits als herkömmliche Aussteifungsbauteile, andererseits bewirken sie eine adaptive Schwingungsdämpfung, sind also neben den passiven Aussteifungsbauteilen auch aktive Beeinflussungsglieder des Schwingungsverhaltens der Karosserie.

Die Streben 4, 5, 7, 8 sind an ihren in Querrichtung auswärts weisenden Enden 4a, 5a, 7a, 8a. mit dem Boden 2 oder Teilen des Fahrwerks verbunden. Hierfür können die Enden als abgeflachte Flanschbereiche ausgebildet sein, die jeweils eine Bohrung zum Durchgriff eines Befestigungsmittels aufweisen. Auch ein Verschweißen oder andersartiges Festlegen der Streben 4, 5, 7, 8 an Karosserie oder Fahrwerk ist möglich.

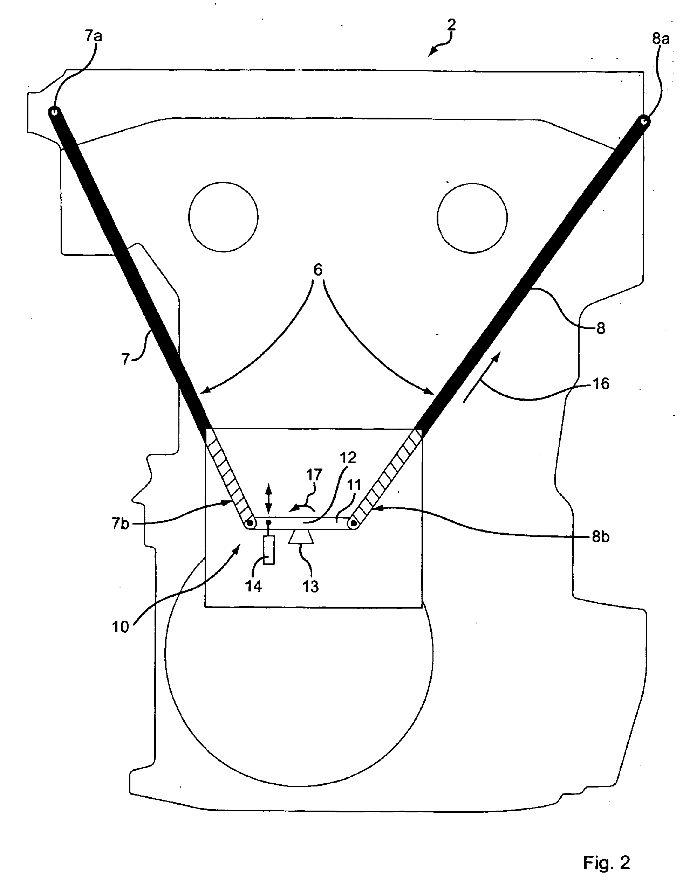

Mit ihren der Karosserieanbindung gegenüber gelegenen Endbereichen 4b; 5b, 7b, 8b sind die Streben 4, 5 des Paares 3 bzw. 7, 8 des Paares 6 jeweils an einer Halteeinrichtung 10 gehalten. Diese ist ihrerseits an der Karosserie oder dem Fahrwerk beweglich gehalten und umfaßt hier einen als Waagebalken ausgebildeten Querlenker 11, der um eine zumindest nahezu vertikale Achse 12 schwenkbar ist. Die Achse 12 ist dabei Bestandteil eines karosseriefesten und am Fahrzeugboden 2 oder einem Querträger des Fahrwerks angeordneten Lagers 13 (Fig. 2). Die Halteeinrichtung 10 kann auch mit beispielsweise vier oder mehr Streben, von denen beispielsweise jeweils zwei zu einer Fahrzeugseite führen, verbunden sein.

Die Halteeinrichtung 10 ist in ihrer Schwenkbewegung um die Achse 12 von einem Stellglied 14, häufig auch als Aktuator bezeichnet, beeinflußbar, das hier einenends mit dem Fahrzeugboden 2 und anderenends mit dem Waagebalken 11 exzentrisch und mit einem Abstand zu dessen Achse 12 verbunden sein kann. Die Strebenenden 4b, 5b, 7b, 8b sind an den äußeren Enden des Waagebalkens 11 angelenkt. Alternativ wäre auch möglich, den Aktuator 14 jeweils genau einer der Streben 4, 5 bzw. 7, 8 zuzuordnen und damit beide Streben 4, 5 bzw. 7, 8 des Paares 3 bzw. 6 zu bewegen.

Der Halteeinrichtung 10 ist weiterhin eine Aufnahmeeinheit (nicht gezeichnet) zugeordnet, mit der eine Auslenkung des Waagebalkens 11 aus seiner hier quer zur Fahrtrichtung F liegenden Normalposition detektierbar ist. Damit ist die Aufnahmeeinheit schwingungsselektiv, da bei einer Anregung einer äußeren Schwingung, etwa durch Überfahren eines Schlaglochs oder einer Schwelle, eine Verwindung in der Karosserie auftritt und zumindest in eine der Streben 4, 5 bzw. 7, 8 eines Paares 3, 6 gegenüber der jeweils anderen eine Zug- oder Druckkraft über ihr karosserieseitig festgelegtes Ende 4a, 5a, 7a, 8a eingeleitet wird. Das jeweils gegenüberliegende Ende 4b, 5b, 7b, 8b ist dadurch bestrebt, den Waagebalken 11 entsprechend mitzunehmen und um seine Achse 12 auszulenken.

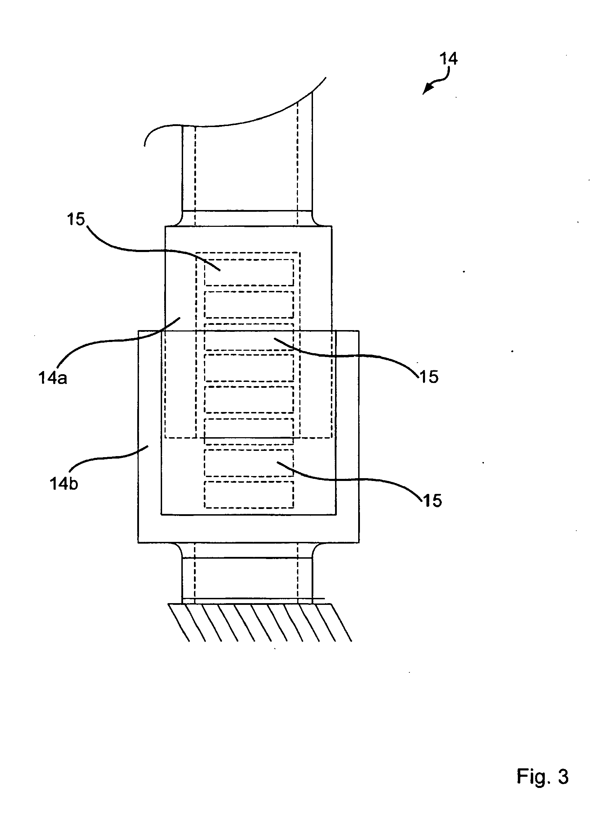

Diese Auslenkneigung wird von der zumindest einen Aufnahmeeinheit, die beispielsweise Druck-Spannungs-Wandler enthält, erfaßt und in ein elektrisches Signal für das Stellglied 14 umgesetzt. Dieses umfaßt zwe.i gegeneinander bewegliche Teile 14a, 14b (Fig. 3), wobei der Teil 14b hier mit der Karosserie 2 und der Teil 14a mit dem Waagebalken 11 verbunden ist. Bei einer Anordnung des Stellglieds 14 in einer der Streben 4, 5 bzw. 7, 8 des jeweiligen Paares 3 bzw. 6 wären beide Teile 14a, 14b Bestandteil dieser jeweiligen Strebe. Um die Relativbewegung der Teile 14a, 14b zu ermöglichen, können Spannungs-Druck-Wandler 15 vorgesehen sein, die bei entsprechender Spannungsansteuerung durch die Aufnahmeeinheit das Stellglied 14 verlängern oder verkürzen und damit eine Schwenkbewegung der Halteeinrichtung 10 um die Achse 12 bewirken.

Wenn etwa durch einseitiges Überfahren einer Unebenheit auf die Strebe 8 eine Zugkraft in Richtung des Pfeils 16 einwirkt, übt sie ein Drehmoment auf den Waagebalken 11 um die Achse 12 in Richtung des Pfeils 17 aus. Dieses wird in der Aufnahmeeinheit, die insbesondere dem Waagebalken 11, aber auch den jeweiligen Streben zugeordnet sein kann, erfaßt, woraufhin das Stellglied 14 ein Steuersignal erhält, das dessen Ausschub und Verlängerung bewirkt, so daß es ein entgegen dem Pfeil 17 wirkendes Drehmoment auf den Waagebalken 11 ausübt. Dessen Auslenkung durch die äußere Anregung wird somit entgegengewirkt, und die beiden Streben 7, 8 des Paares 6 werden gegenphasig zueinander mit Druck und Zug beaufschlagt. Beide Streben 7, 8 steifen dadurch gleichzeitig die Karosserie aus und bewirken eine aktive Dämpfung. Damit wird die Wirkung der äußeren Anregung nahezu ausgelöscht. Stellglied 14 und Aufnahmeeinheit haben sehr kurze Ansprechzeiten, so daß Anregungsfrequenzen von einigen Hz bis zu einigen 10 Hz effektiv entgegengewirkt werden kann. Die Streben 4, 5, 7, 8 müssen dabei außerhalb materialimmanenter Flexibilität selbst nicht längenveränderbar sein. Dies ist jedoch zusätzlich möglich.

In jedem Fall ist nur ein Stellglied 14 zur Kraftbeaufschlagung beider Streben 4, 5 bzw. 7, 8 eines Paares 3 oder 6 erforderlich, was Konstruktionsaufwand und Fahrzeugmasse niedrig hält. Idealerweise ist auch nur eine Aufnahmeeinheit vorzusehen. Der Waagebalken 11 muß ebenfalls nur an einer Stelle 13 an der Karosserie gehalten sein und kann mit den Streben 4, 5, bzw. 7, 8 vorkonfektioniert sein, was die Montage weiter vereinfacht.

In einem weiteren Ausführungsbeispiel (nicht gezeichnet) bildet das erfindungsgemäße Fahrzeug einen Gitterrohrrahmen aus, der als Tragwerk für die Karosserie dient, die dann nicht selbsttragend sein muß. Strebenpaare dieses Rahmens können hierbei ebenfalls erfindungsgemäß ausgebildet sein, so daß dann der Rahmen nicht starr ist, sondern, wie unten erläutert, auf äußere Schwingungsanregung aktiv reagieren kann. Ebenso kann die Erfindung auch auf einen Tragrahmen etwa eines Motorrads angewandt werden.

## Patentansprüche

1. Kraftfahrzeug (1), insbesondere Cabriolet-Fahrzeug, mit einer Fahrzeugkarosserie, der zumindest ein Paar (3;6) von Streben (4,5;7,8) und zumindest eine schwingungsselektive Aufnahmeeinheit zur Erfassung von im Fahrbetrieb auftretenden Längsbeanspruchungen der Streben (4,5;7,8) und zumindest ein Stellglied (14) zum Bewirken einer einer Längsbeanspruchung entgegenwirkenden Kraft zugeordnet ist,
**dadurch gekennzeichnet,**
**daß** zumindest zwei Streben (4,5 bzw. 7, 8) über eine gegenüber der Karosserie beweglich gehaltene Halteeinrichtung (10) verbunden sind, der ein gemeinsames Stellglied (14) zur gleichzeitigen Beeinflussung von damit verbundenen Streben (4,5 bzw. 7,8) zugeordnet ist.

2. Kraftfahrzeug nach Anspruch 1,
**dadurch gekennzeichnet,**
**daß** die Halteeinrichtung (10) an der Karosserie schwenkbar (12) gehalten ist.

3. Kraftfahrzeug nach Anspruch 2,
**dadurch gekennzeichnet,**
**daß** die Halteeinrichtung (10) zumindest einen Lenker (11) umfaßt, der in seinem mittleren Bereich um eine zumindest nahezu vertikale Achse (12) schwenkbar ist und der an seinen Endbereichen mit Streben (4,5;7,8) verbunden ist.

4. Kraftfahrzeug nach einem der Ansprüche 1 bis 3,
**dadurch gekennzeichnet,**
**daß** Streben (4,5;7,8) von der Karosserie gesonderte, diese aussteifende Bauteile bilden.

5. Kraftfahrzeug nach einem der Ansprüche 1 bis 4,
**dadurch gekennzeichnet,**
**daß** Streben (4,5;7,8) sich von äußeren Randbereichen der Karosserie bis in einen mittleren Bereich des Fahrzeugbodens (2) erstrecken.

6. Kraftfahrzeug, insbesondere Cabriolet-Fahrzeug, mit einem Tragrahmen, der zumindest ein Paar (3;6) von Streben (4,5;7,8) umfaßt, dem zumindest eine schwingungsselektive Aufnahmeeinheit zur Erfassung von im Fahrbetrieb auftretenden Längsbeanspruchungen der Streben (4,5;7,8) und zumindest ein Stellglied (14) zum Bewirken einer einer Längsbeanspruchung entgegenwirkenden Kraft zugeordnet ist,
**dadurch gekennzeichnet,**
**daß** zumindest zwei Streben (4,5;7,8) über eine gegenüber dem Tragrahmen beweglich gehaltene Halteeinrichtung (10) verbunden sind, der ein gemeinsames Stellglied (14) zur gleichzeitigen Beeinflussung von damit verbundenen Streben (4,5;7,8) zugeordnet ist.

7. Kraftfahrzeug nach einem der Ansprüche 1 bis 6,
**dadurch gekennzeichnet,**
**daß** der Halteeinrichtung (10) eine für jeweils ein Paar (3;6) von Streben (4, 5; 7, 8) gemeinsame schwingungsselektive Aufnahmeeinheit zugeordnet ist.

8. Kraftfahrzeug nach einem der Ansprüche 1 bis 7,
**dadurch gekennzeichnet,**
**daß** das gemeinsame Stellglied (14) mehrteilig ausgebildet ist und gegeneinander relativbewegliche Teilabschnitte (14a;14b) umfaßt.

9. Kraftfahrzeug nach einem der Ansprüche 1 bis 8,
**dadurch gekennzeichnet,**
**daß** die Aufnahmeeinheit einen Druck-Spannungs-Wandler umfaßt.

10. Kraftfahrzeug nach einem der Ansprüche 1 bis 9,
**dadurch gekennzeichnet,**
**daß** das Stellglied (14) einen Spannungs-Druck-Wandler (15) umfaßt.

## Claims

1. Motor vehicle (1), in particular a convertible motor vehicle, with a vehicle body, allocated to which are at least one pair (3; 6) of bracing elements (4, 5; 7, 8) and at least one vibration-selective receiver unit for detecting longitudinal stresses of the bracing elements (4, 5; 7, 8) occurring during driving operation and at least one actuating element (14) for exerting a force counteracting a longitudinal stress, **characterised in that** at least two bracing elements (4, 5 and 7, 8 respectively) are connected by means of a retaining device (10) held to be movable in relation to the body, allocated to which is a common actuating element (14) for the simultaneous influencing of bracing elements (4, 5 and 7, 8 respectively) connected to it.

2. Motor vehicle according to Claim 1, **characterised in that** the retaining device (10) is held at the body such that it can pivot.

3. Motor vehicle according to Claim 2, **characterised in that** the retaining device (10) comprises at least one link element (11) which in its middle area is capable of pivoting about one at least approximately vertical axis (12) and which is connected at its end areas to bracing elements (4, 5; 7, 8).

4. Motor vehicle according to any one of Claims 1 to 3, **characterised in that** bracing elements (4, 5; 7, 8) form components separate from the body and providing it with rigidity.

5. Motor vehicle according to any one of Claims 1 to 4, **characterised in that** bracing elements (4, 5; 7, 8) extend from outer edge areas of the body as far as a middle area of the vehicle floor (2).

6. Motor vehicle, in particular a convertible motor vehicle, with a supporting frame, which comprises at least one pair (3; 6) of bracing elements (4, 5; 7, 8), allocated to which are at least one vibration-selective receiver unit for detecting longitudinal stresses of the bracing elements (4, 5; 7, 8) occurring during driving operation and at least one actuating element (14) for exerting a force counteracting a longitudinal stress, **characterised in that** at least two bracing elements (4, 5 and 7, 8 respectively) are connected by means of a retaining device (10) held to be movable in relation to the supporting frame, allocated to which is a common actuating element (14) for the simultaneous influencing of bracing elements (4, 5 and 7, 8 respectively) connected to it.

7. Motor vehicle according to any one of Claims 1 to 6, **characterised in that** allocated to the retaining device (10) is a vibration-selective receiver unit common in each case to a pair (3; 6) of bracing elements (4, 5; 7, 8).

8. Motor vehicle according to any one of Claims 1 to 7, **characterised in that** the common actuating element (14) is formed of a plurality of parts and comprises part sections (14a; 14b) which move relative to one another.

9. Motor vehicle according to any one of Claims 1 to 8, **characterised in that** the receiver unit comprises a compression-voltage converter.

10. Motor vehicle according to any one of Claims 1 to 9, **characterised in that** the actuating element (14) comprises a voltage-compression converter (15).

## Revendications

1. Véhicule automobile (1), en particulier véhicule décapotable, comprenant une carrosserie de véhicule, à laquelle est associée au moins une paire (3; 6) de jambes de force (4, 5; 7, 8) et au moins un ensemble récepteur sélectif des vibrations destiné à détecter les sollicitations longitudinales des jambes de force (4, 5; 7, 8) rencontrées pendant la conduite, et au moins un élément actionneur (14) destiné à créer une force contraire à une sollicitation longitudinale,
**caractérisé en ce qu'**au moins deux jambes de force (4, 5 ou 7, 8) sont reliées l'une à l'autre par l'intermédiaire du dispositif de support (10) monté de façon mobile par rapport à la carrosserie, dispositif auquel est associé un élément actionneur commun (14), destiné à exercer une influence simultanée sur les jambes de force (4, 5 ou 7, 8) reliées à celui-ci.

2. Véhicule automobile selon la revendication 1, **caractérisé en ce que** le dispositif de support (10) est monté de façon pivotante (12) sur la carrosserie.

3. Véhicule automobile selon la revendication 2, **caractérisé en ce que** le dispositif de support (10) comprend au moins un bras de commande (11) qui est monté de façon oscillante, au niveau de sa partie médiane, autour d'un axe (12) au moins à peu près vertical, et dont les zones terminales sont reliées aux jambes de force (4, 5; 7, 8).

4. Véhicule automobile selon l'une des revendications 1 à 3, **caractérisé en ce que** les jambes de force (4, 5; 7, 8) constituent des composants distincts de la carrosserie, raidissant cette dernière.

5. Véhicule automobile selon l'une des revendications 1 à 4, **caractérisé en ce que** les jambes de force (4, 5; 7, 8) s'étendent depuis les zones marginales extérieures de la carrosserie jusque dans une partie médiane du plancher du véhicule (2).

6. Véhicule automobile, en particulier véhicule décapotable, comprenant un châssis porteur auquel est associée au moins une paire (3; 6) de jambes de force (4, 5; 7, 8) et au moins un ensemble récepteur sélectif des vibrations destiné à détecter les sollicitations longitudinales des jambes de force (4, 5; 7, 8) rencontrées pendant la conduite, et au moins un élément actionneur (14) destiné à créer une force contraire à une sollicitation longitudinale,
**caractérisé en ce qu'**au moins deux jambes de force (4, 5; 7, 8) sont reliées l'une à l'autre par l'intermédiaire du dispositif de support (10) monté de façon mobile par rapport au châssis porteur, dispositif auquel est associé un dispositif actionneur commun (14), destiné à exercer une influence simultanée sur les jambes de force (4, 5; 7, 8) reliées à celui-ci.

7. Véhicule automobile selon l'une des revendications 1 à 6, **caractérisé en ce qu'**un ensemble récepteur sélectif des vibrations, qui est commun pour une paire correspondante (3; 6) de jambes de force (4, 5; 7, 8) est associé au dispositif de support (10).

8. Véhicule automobile selon l'une des revendications 1 à 7, **caractérisé en ce que** l'élément actionneur commun (14) est réalisé en plusieurs parties et comporte des sections partielles (14a; 14b) pouvant effectuer des mouvements relatifs l'une par rapport à l'autre.

9. Véhicule automobile selon l'une des revendications 1 à 8, **caractérisé en ce que** l'ensemble récepteur comprend un convertisseur pression-tension.

10. Véhicule automobile selon l'une des revendications 1 à 9, **caractérisé en ce que** l'élément actionneur (14) comprend un convertisseur tension-pression (15).
